# EUROPÄISCHE PATENTSCHRIFT

(11) **EP 2 162 289 B1**
(45) Veröffentlichungstag und Bekanntmachung des Hinweises auf die Patenterteilung: **01.08.2012**
(21) Anmeldenummer: 08759201.0
(22) Anmeldetag: 12.06.2008
(51) Int. Cl.: B41F 19/06

(54) **VERFAHREN ZUR ERHÖHUNG DER AUSBEUTE EINER TRANSFERFOLIE BEIM PRÄGEN UND DAFÜR GEEIGNETE VORRICHTUNG**
METHOD FOR INCREASING THE OUTPUT OF A TRANSFER FILM DURING EMBOSSING AND DEVICE SUITABLE FOR SAID METHOD
PROCÉDÉ POUR AMÉLIORER LE RENDEMENT D'UN FILM DE TRANSFERT LORS D'UN GAUFRAGE ET DISPOSITIF UTILISÉ À CET EFFET

(30) Priorität: 14.06.2007 DE 102007027493
(43) Veröffentlichungstag der Anmeldung: 17.03.2010
(73) Patentinhaber: Leonhard Kurz Stiftung & Co. KG, 90763 Fürth (DE)
(72) Erfinder: DRINIC, Ljubisa, 90445 Nürnberg (DE); FRIEDMANN, Ralf, 91578 Leutershausen (DE)
(74) Vertreter: Zinsinger, Norbert
(86) Internationale Anmeldenummer: PCT/EP2008/004697
(87) Internationale Veröffentlichungsnummer: WO 2008/151797

(56) Entgegenhaltungen:
- EP-A- 0 433 575
- WO-A-01/24945
- WO-A-94/13487

## Beschreibung

Die Erfindung betrifft ein Verfahren zur Erhöhung der Ausbeute einer Transferfolie beim Prägen, insbesondere beim Heißprägen, wobei die Transferfolie eine Trägerfolie und eine von der Trägerfolie ablösbare Übertragungslage aufweist, wobei während eines ersten Prägevorganges erste Bereiche der Übertragungslage, die in einem Abstand a voneinander entfernt angeordnet sind, mittels eines ersten Prägewerkzeugs von der Transferfolie auf mindestens ein Substrat übertragen werden, wobei in der Übertragungslage der Transferfolie erste Öffnungen im Abstand a erzeugt werden.

Solch ein Verfahren ist aus dem Dokument WO94/13487 bekannt. Beim Beprägen von Karten aus Papier oder Kunststoff zur Massenherstellung von Bankkarten, Kreditkarten, Telefonkarten, Führerscheinkarten, Ausweiskarten und dergleichen, werden mittels bekannten Vorrichtungen zur Kartenherstellung, beispielsweise vom Typ "Cardline" der Firma Atlantic Zeiser, Bereiche einer Übertragungslage einer Transferfolie auf ein Kartensubstrat geprägt, wobei bis zu 40000 Karten pro Stunde beprägt werden. Um derart hohe Prägeleistungen zu erreichen, wird üblicherweise ein Abrollheißprägeverfahren eingesetzt, bei dem ein Prägerad, dessen Oberfläche erhöhte Segmente in Form der aus der Übertragungslage der Transferfolie auszuprägenden Bereiche aufweist, verwendet wird. Dem Prägerad schließt sich zudem üblicherweise eine Kühleinrichtung an, der das beprägte Kartensubstrat und die noch am Kartensubstrat haftende Transferfolie zur Abkühlung zugeführt wird, bevor die Transferfolie von Kartensubstrat getrennt wird. Bei der Trennung des Kartensubstrats und der Transferfolie verbleiben die auf die Kartenoberfläche geprägten Bereiche der Übertragungslage auf dem Kartensubstrat. Die abgezogene Transferfolie weist auf der Trägerfolie nur noch den Teil der Übertragungslage auf, der nicht auf der Kartenoberfläche fixiert wurde. Es liegt somit nach dem Prägen eine Trägerfolie mit einer Löcher aufweisenden Übertragungslage als Abfallprodukt vor.

Die Kartensubstrate werden der Vorrichtung üblicherweise mit einer Transporteinrichtung zugeführt, wobei häufig Transportketten, die eine konstante Kettenteilung aufweisen, verwendet werden. Die Transferfolie wird dabei unabhängig von den tatsächlich auszuprägenden Bereichen über eine Länge entsprechend der jeweiligen Kettenteilung für jede einzelne Karte verbraucht. Es verbleibt nach dem Ausprägen ein relativ großer Rest an Übertragungslage ungenutzt auf der Trägerfolie. Bei einem Massenprodukt wie eine Karte sind trotz der relativ hohen Kosten für Transferfolien nur geringe Preise pro Karte erzielbar, so dass eine möglichst wirtschaftliche Herstellung von Karten erforderlich ist.

Um eine bessere Ausnutzung einer Transferfolie zu erzielen wurde gemäß EP 0 673 317 B1 bereits eine relativ aufwendige Vorrichtung vorgeschlagen, bei welcher die Transferfolie unter Verwendung einer Umlenkeinrichtung gleichzeitig zum Beprägen mehrerer, in Transportrichtung nebeneinander angeordneter Substrate genutzt werden kann.

Es ist daher Aufgabe der Erfindung, die Wirtschaftlichkeit von Prägeprozessen hinsichtlich der Ausnutzung von Transferfolien weiter zu verbessern und ein dazu geeignetes Verfahren sowie eine einfache Vorrichtung bereitzustellen.

Die Aufgabe wird erfindungsgemäß durch ein Verfahren zur Erhöhung der Ausbeute einer Transferfolie beim Prägen gemäß Anspruch 1 gelost.

Die Aufgabe wird auch durch eine Vorrichtung gemäß Anspruch 11 zur Durchführung des erfindungsgemäßen Verfahrens gelöst.

Die ursprünglich nach dem ersten Prägevorgang als Abfall verworfene Transferfolie mit der die ersten Öffnungen aufweisenden Übertragungslage wird demnach mindestens ein zweites Mal verwendet. Dabei kann die gebrauchte Transferfolie bei ausreichendem Abstand zwischen den ersten Öffnungen entweder noch einmal im gleichen Prägeprozess verwendet werden oder aber für andere Prägeprozesse, bei denen unterschiedlich geformte Bereiche aus der Übertragungslage ausgeprägt werden, verwendet werden. Dies ist möglich, wenn die Transferfolie nach dem ersten Prägevorgang gleichmäßig und besonders sorgfältig aufgewickelt wird, so dass keine Faltenbildung oder übermäßige Deformation an der Transferfolie auftritt. Auch ein partielles Ablösen von der Trägerfolie oder eine Beschädigung der Übertragungslage an der bereits einmal verwendeten Transferfolie ist zu vermeiden, um den mindestens einen weiteren Prägevorgang möglichst störungsfrei durchführen zu können.

Dabei ist eine zweimalige Verwendung der Transferfolie besonders bevorzugt, jedoch können sich bei entsprechend sorgfältiger Handhabung der gebrauchten Transferfolie noch weitere Prägevorgänge anschließen.

Es ist besonders bevorzugt, wenn als zweites Prägewerkzeug erneut das erste Prägewerkzeug verwendet wird. Nach dem ersten Prägevorgang wird der bereits einmal gebrauchte Transferfolienwickel demnach erneut verwendet und der bereits einmal verwendeten Vorrichtung mit dem ersten Prägewerkzeug erneut zugeführt. Dies ist dann möglich, wenn zwischen den ersten Öffnungen ein genügend großer Bereich an Übertragungslage für zweite Öffnungen verbleibt, deren Dimensionen denen der ersten Öffnungen entsprechen.

Es hat sich demnach bewährt, wenn die ersten Öffnungen und die zweiten Öffnungen gleich groß ausgebildet werden. Aber auch unterschiedlich große oder unterschiedlich geformte erste und zweite Öffnungen können gebildet werden.

Es ist von Vorteil, wenn eine erste Öffnung und eine benachbarte zweite Öffnung mindestens 0,5 mm, insbesondere mindestens 1 mm, voneinander beabstandet gebildet werden. Dadurch wird eine Überschneidung von ersten und zweiten Öffnungen vermieden, die zu einer unvollständigen Prägung auf dem mindestens einen weiteren Substrat führen würde. Weiterhin wird ein Ablösen dünner Stege der Übertragungslage zwischen zwei benachbarten Öffnungen beim Abwickeln der bereits gebrauchten Transferfolie zuverlässig vermieden.

Weiterhin hat es sich bewährt, wenn das mindestens eine Substrat und das mindestens eine weitere Substrat mit gleichen Dimensionen verwendet werden.

Es hat sich im Hinblick auf einen möglichst gut steuerbaren Ablauf des mindestens einen weiteren Prägevorgangs bewährt, wenn der Abstand a zwischen zwei benachbarten ersten Öffnungen über die gesamte Länge der Transferfolie konstant gehalten wird. Dafür muss auch dann gesorgt werden, wenn es während des ersten Prägevorgangs zu einem Maschinenstillstand oder einer sonstigen Störung kommt.

Dabei hat es sich als vorteilhaft erwiesen, wenn eine Lage der ersten Öffnungen in der Übertragungslage der Transferfolie in einer ersten Sensoreinheit mittels mindestens eines ersten Sensors in Form von ersten Steuerdaten erfasst wird.

Mittels der ersten Steuerdaten wird während des ersten Prägevorgangs vorzugsweise ein Bewegungsablauf, insbesondere eine Geschwindigkeit und/oder eine räumliche Lage, des ersten Prägewerkzeugs und/oder der Transferfolie und/oder einer Transporteinrichtung zum Transport des mindestens einen Substrats geregelt.

Um die Positionierung einer zweiten Öffnungen während des mindestens einen weiteren Prägevorgangs lagerichtig vorzunehmen, wird insbesondere eine Lage der ersten Öffnungen in der Übertragungslage der Transferfolie vor dem mindestens einen weiteren Prägevorgang in einer zweiten Sensoreinheit, welche mindestens einen weiteren Sensor aufweist, in Form von zweiten Steuerdaten erfasst.

Die zweite Sensoreinheit weist vorzugsweise insgesamt drei weitere Sensoren auf, wobei mittels zwei Sensoren die Lage einer ersten Öffnung bestimmt wird und mittels des dritten Sensors eine Position der benachbart zu dieser ersten Öffnung zu bildenden zweiten Öffnung ermittelt wird. Nachdem beim Aufwickeln der gebrauchten Transferfolie eine geringfügige Dehnung oder Verzerrung der Transferfolie auftreten kann, ist bei der Durchführung des mindestens einen weiteren Prägevorgangs nicht mehr von einem konstanten Abstand a zwischen den ersten Öffnungen auszugehen, sondern es müssen die real vorliegenden Abstände zwischen den ersten Öffnungen und die real auftretenden Längendimensionen der ersten Öffnungen berücksichtigt werden.

Die Sensoren der ersten Sensoreinheit und/oder der zweiten Sensoreinheit sind vorzugsweise optische Sensoren.

Es ist bevorzugt, wenn während des mindestens einen weiteren Prägevorgangs ein Bewegungsablauf, insbesondere eine Geschwindigkeit und/oder eine räumliche Lage, des zweiten Prägewerkzeugs und/oder der Transferfolie und/oder einer Transporteinrichtung zum Transport des mindestens einen weiteren Substrats mittels der zweiten Steuerdaten geregelt wird.

Besonders bevorzugt ist es, wenn die Transferfolie von einem Transferfolienspeicher in Form einer ersten Folienkassette dem ersten Prägewerkzeug zugeführt wird und nach dem ersten Prägevorgang mit konstanter Folienspannung auf einen Transferfolienaufnehmer in Form einer zweiten Folienkassette aufgewickelt wird. Dabei wird der Transferfolienspeicher insbesondere durch eine erste Folienkassette und der Transferfolienaufnehmer insbesondere durch eine zweite Folienkassette gebildet sind, die jeweils einen ringförmigen Kern und zwei Abdeckscheiben umfassen, so dass die Transferfolie um den Kern wickelbar ist und seitlich jeweils durch eine der beiden Abdeckscheiben begrenzt wird. Eine derartige Folienkassette ähnelt somit einer Filmrolle, die ein besonders gleichmäßiges und störungsfreies Aufwickeln der gebrauchten Transferfolie und deren erneuten Einsatz ermöglicht.

Dazu wird nach dem ersten Prägevorgang die zweite Folienkassette, auf die die gebrauchte Transferfolie inklusive der ersten Öffnungen aufgewickelt wurde, als Transferfolienspeicher zur Durchführung des mindestens einen weiteren Prägevorgangs verwendet. Die leere erste Folienkassette wird dagegen als Transferfolienaufnehmer verwendet. An der Vorrichtung wird dazu die Position der ersten und der zweiten Folienkassette in einfacher Weise vertauscht.

Vorzugsweise weist die Vorrichtung jeweils einen Antriebsmotor zum geregelten Antrieb der ersten und zweiten Folienkassette auf, um die Transferfolie vom Transferfolienspeicher abzuwickeln und auf den Transferfolienaufnehmer aufzuwickeln.

Als Substrate haben sich beprägbare Materialien wie Papier, Kunststoff, oder Laminate enthaltend Papier und/oder Kunststofffolie bewährt.

Besonders bevorzugt ist es, wenn das mindestens eine Substrat und das mindestens eine weitere Substrat jeweils durch eine Karte, insbesondere eine Bankkarte, eine Kreditkarte, eine Telefonkarte, eine Führerscheinkarte, eine Ausweiskarte, eine Lotteriekarte, eine Geschenkkarte oder dergleichen gebildet wird.

Die ersten und zweiten Bereiche der Übertragungslage der Transferfolie können mittels Prägens dauerhaft auf dem jeweiligen Substrat befestigt werden. Dies ist insbesondere zur Bildung von Sicherheitselementen, die nicht mehr ablösbar sein sollen, wie beispielsweise Sicherheitselementen mit holograpischen Darstellungen, Codierungen, Firmenlogos und der gleichen, üblich. Die ersten und zweiten Bereiche der Übertragungslage der Transferfolie können mittels Prägens aber auch in Form eines zumindest teilweise abrubbelbaren Überzugs auf dem Substrat angeordnet werden. Dies ist beispielsweise für Lotterielose üblich, bei denen eine Gewinninformation durch eine entfernbare Abdeckschicht optisch verdeckt werden soll.

Um einen möglichst gleichmäßigen Wickel aus gebrauchter Transferfolie auszubilden hat es sich bewährt, wenn die Vorrichtung zwischen dem Prägewerkzeug und dem Transferfolienaufnehmer eine erste Transferfolien-Spannvorrichtung aufweist, welche die Folienspannung der Transferfolie im Bereich zwischen dem Prägewerkzeug und dem Transferfolienaufnehmer konstant hält, insbesondere eine erste Transferfolien-Spannvorrichtung, die eine bewegliche erste Spannrolle oder erste Tänzerrolle umfasst. Unter "beweglich" wird hier verstanden, dass die Lage der Drehachse der Spann- oder Tänzerrolle verändert werden kann.

Weiterhin ist es von Vorteil, wenn zwischen dem Transferfolienspeicher und der zweiten Sensoreinheit eine zweite Transferfolien-Spannvorrichtung angeordnet ist, welche die Folienspannung der Transferfolie im Bereich zwischen dem Transferfolienspeicher und dem Prägewerkzeug konstant hält, insbesondere eine zweite Transferfolien-Spannvorrichtung, die eine bewegliche zweite Spannrolle oder zweite Tänzerrolle umfasst. Unter "beweglich" wird hier verstanden, dass die Lage der Drehachse der Spann- oder Tänzerrolle verändert werden kann.

Eine Position der ersten und/oder der zweiten Spannrolle bzw. Tänzerrolle ist dabei vorzugsweise pneumatisch veränderbar.

Insbesondere ist eine Steuereinheit zur Steuerung der Position der ersten und/oder der zweiten Spannrolle bzw. Tänzerrolle vorhanden.

Das Prägewerkzeug der Vorrichtung ist vorzugsweise als ein Prägerad ausgebildet, welches eine Abrollprägung ermöglicht. Zum Antrieb des Prägerads hat es sich bewährt, einen Servomotor oder eine antriebstechnische Kopplung an den Antrieb der Transporteinrichtung zum Transport der Substrate vorzusehen und die Geschwindigkeit des Prägerads gemäß den Vorgaben durch die ersten oder zweiten Steuerdaten zu regeln.

Das Prägerad ist insbesondere derart angeordnet, dass es sich gegenüber einer Gegendruckrolle befindet. Das Prägewerkzeug und/oder die Gegendruckrolle sind vorzugsweise beheizbar, insbesondere bei der Durchführung eines Heißprägeverfahrens.

Um die Prägegeschwindigkeit zu erhöhen, ist es bevorzugt, wenn zwischen dem Prägewerkzeug und dem Transferfolienaufnehmer der Vorrichtung mindestens eine Kühleinrichtung zur Kühlung mindestens des ersten und/oder zweiten Bereichs der Transferfolie angeordnet ist. Die mindestens eine Kühleinrichtung umfasst vorzugsweise ein Gebläse.

Die Figuren 1 bis 5 sollen das erfindungsgemäße Verfahren und die erfindungsgemäße Vorrichtung anhand eines Kartenprägeverfahrens beispielhaft erläutern. So zeigt:
- Figur 1: schematisch eine Transferfolie beim ersten Prägevorgang,
- Figur 2: die Transferfolie aus Figur 1 bei einem weiteren Prägevorgang,
- Figur 3a: die Transferfolie nach den beiden Prägevorgängen gemäß den Figuren 1 und 2;
- Figur 3b: die weiteren Substrate 2'nach dem weiteren Prägevorgang,
- Figur 4: eine Vorrichtung zur Durchführung der gemäß den Figuren 1 und 2 durchgeführten Verfahrensschritte in einer schematischen Seitenansicht, und
- Figur 5: einen Ausschnitt W aus der Vorrichtung gemäß Figur 4 im Bereich der zweiten Sensoreinheit.

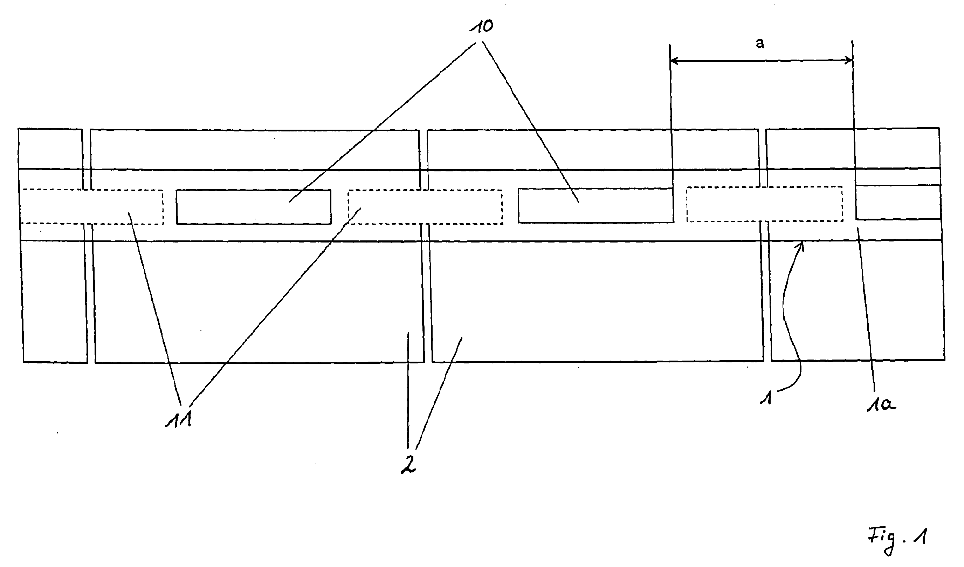

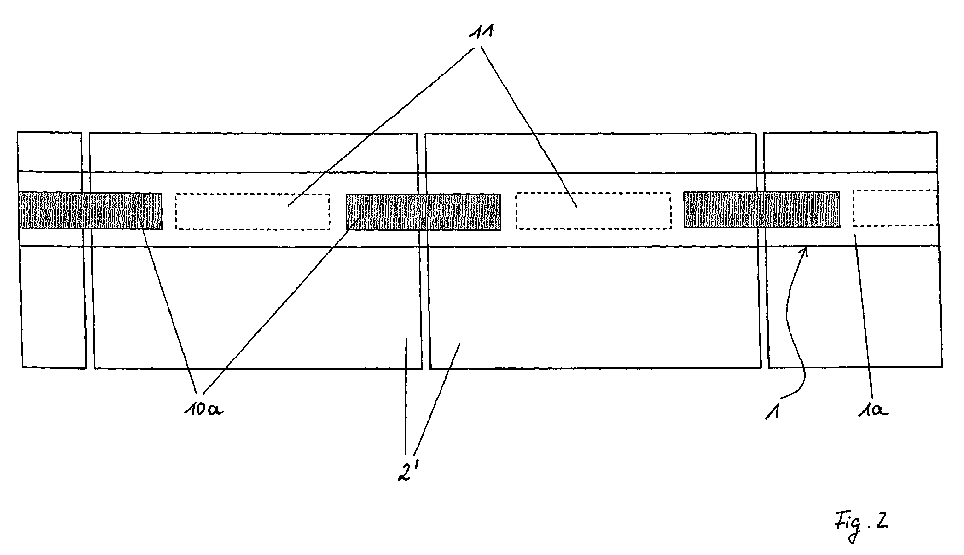

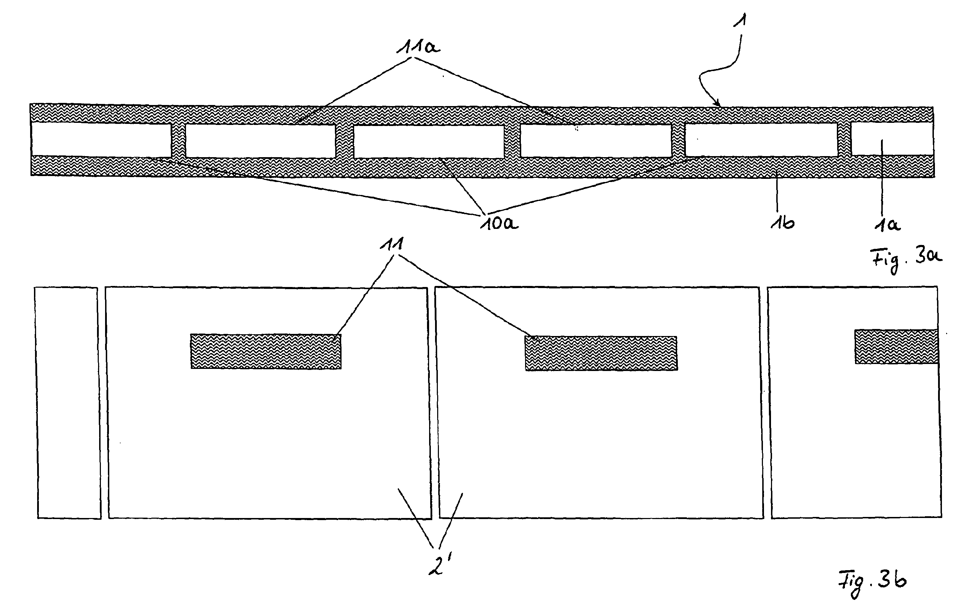

Figur 1 zeigt schematisch eine Transferfolie 1 beim ersten Prägevorgang, in welchem Substrate 2 in Form von Karten beprägt werden sollen. Die Substrate 2 sind in Reihe nacheinander angeordnet. Oberhalb der Substrate 2 ist eine bandförmige Transferfolie 1 angeordnet, die eine Trägerfolie 1a und eine in dieser Darstellung nicht sichtbare Übertragungslage 1b (siehe Figur 3a) auf der, den Substraten 2 zugewandten Seite der Trägerfolie 1 a aufweist. In den ersten Bereichen 10, deren Lage auf der Transferfolie 1 hier durch eine durchgezogene rechteckige Linie angedeutet ist, wird die Übertragungslage 1b auf die Substrate 2 geprägt, wobei sich die ersten Bereiche 10 jeweils im konstanten Abstand a voneinander entfernt auf der Transferfolie 1 befinden. Beim Ausprägen der ersten Bereiche 10 auf die Substrate 2 entsteht in der Übertragungslage 1 b der Transferfolie 1 jeweils eine erste Öffnung 10a (siehe Figuren 2 und 3a). Nach dem ersten Prägevorgang erfolgt eine gleichmäßige, geregelte Aufwicklung der Transferfolie 1.

Figur 2 zeigt nun schematisch die Transferfolie 1 aus Figur 1 beim zweiten Prägevorgang, in welchem weitere Substrate 2' in Form von Karten beprägt werden sollen. Die Substrate 2' sind in Reihe nacheinander angeordnet. Oberhalb der Substrate 2' ist die bandförmige Transferfolie 1 angeordnet, die die Trägerfolie 1 a und die in dieser Darstellung nicht sichtbare Übertragungslage 1 b (siehe Figur 3a) auf der, den Substraten 2' zugewandten Seite der Trägerfolie 1a aufweist. In den zweiten Bereichen 11, deren Lage auf der Transferfolie 1 hier durch eine gestrichelte rechteckige Linie angedeutet ist, wird die Übertragungslage 1b auf die Substrate 2' geprägt, wobei sich die zweiten Bereiche 11 zwischen den im ersten Prägevorgang ausgebildeten ersten Öffnungen 10a in der Übertragungslage 1 b auf der Transferfolie 1 befinden. Die Lage der ersten Öffnungen 10a in der Übertragungslage 1 b der Transferfolie 1 ist in dieser Darstellung durch schraffierte Felder angedeutet.

Beim Ausprägen der zweiten Bereiche 11 auf die Substrate 2' entstehen in der Übertragungslage 1 b der Transferfolie 1 zweite Öffnungen 11 a (siehe Figur 3a).

Figur 3a zeigt die Transferfolie 1 nach dem ersten und dem weiteren Prägevorgang gemäß den Figuren 1 und 2 von der Seite gesehen, auf der sich die Übertragungslage 1b befindet. Die Übertragungslage 1b weist erste Öffnungen 10a auf, die während des ersten Prägevorgangs gebildet wurden und weiterhin zweite Öffnungen 11a auf, die während des weiteren Prägevorgangs gebildet wurden. Die ersten Öffnungen 10a und die zweiten Öffnungen 11a geben den Blick frei auf die Trägerfolie 1 a.

Figur 3b zeigt die weiteren Substrate 2', die gemäß Figur 2 mit den zweiten Bereichen 11 der Übertragungslage 1 b der Transferfolie 1 beprägt wurden, nach dem Abziehen der Transferfolie 1.

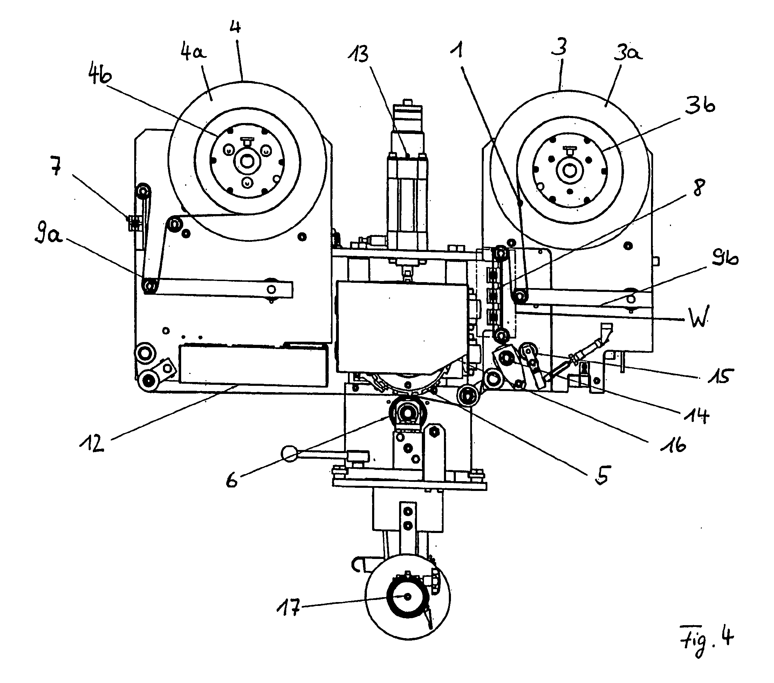

Figur 4 zeigt eine Vorrichtung zur Durchführung der gemäß den Figuren 1 und 2 durchgeführten Verfahrensschritte in einer schematischen Seitenansicht. Die Transferfolie 1 wird über einen Transferfolienspeicher 3 in Form einer mittels eines Motors rotierend angetriebenen ersten Folienkassette bereitgestellt, wobei die Transferfolie 1 auf den Kern 3b der ersten Folienkassette, der sich zwischen den Abdeckscheiben 3a befindet, aufgewickelt ist und über eine, eine zweite Tänzerrolle 9b umfassende zweite Transferfolien-Spannvorrichtung, welche die Transferfolienspannung konstant hält, der zweiten Sensoreinheit 8 zugeführt. Nach der zweiten Sensoreinheit 8 gelangt die Transferfolie 1 zu einem mittels eines Servomotors angetriebenen Zugwerk 14 und zur Andruckrolle 15.

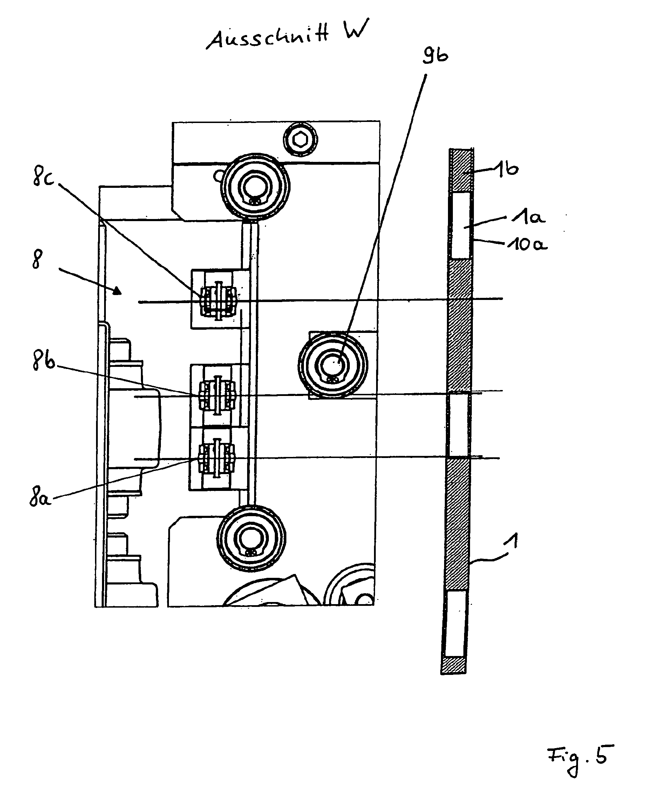

Von hier aus wird die Transferfolie 1 einem Prägewerkzeug 5 in Form eines segmentierten Prägerades zugeführt, dessen Andruckkraft gegenüber einer Gegendruckrolle 6 über einen Prägezylinder 13 mit Hubverstellung regulierbar ist. Die Transferfolie 1 sowie die hier nicht dargestellten Substrate 2 werden zur Durchführung des ersten Prägevorgangs zwischen dem Prägewerkzeug 5 und der Gegendruckrolle 6 hindurchgefördert. Das Prägewerkzeug 5 ist mittels einer Heizhaube 16 beheizbar. Eine Segmentverstellung 17 dient zur Einstellung der Lage des zu beprägenden Feldes auf einem Substrat in Längsrichtung des Substrats. Die ersten Bereiche 10 der Übertragungslage 1 b der Transferfolie (siehe Figuren 1 bis 3) werden während eines ersten Durchlaufs der Transferfolie 1 durch die Vorrichtung mittels des Prägewerkzeugs 5 an jeweils einem der Substrate 2 fixiert. Nach dem Prägewerkzeug 5 werden der Verbund aus Substrat 2 und Transferfolie 1 gemeinsam einer Kühleinrichtung 12 zugeführt und anschließend die Transferfolie 1 vom beprägten Substrat 2 abgezogen. An jedem Substrat 2 fixiert verbleibt ein erster Bereich 10 der Übertragungslage 1b. Die Transferfolie 1 inklusive der ersten Öffnungen 10a wird nun über eine erste Sensoreinheit 7 und eine, eine erste Tänzerrolle 9a umfassende erste Transferfolien-Spannvorrichtung, welche die Transferfolienspannung konstant hält, dem Transferfolienaufnehmer 4 in Form einer mittels eines Motors rotierend angetriebenen zweiten Folienkassette zugeführt und auf den Kern 4b der zweiten Folienkassette, der sich zwischen den Abdeckscheiben 4a befindet, aufgewickelt. Die erste Sensoreinheit 7 erfasst während des ersten Prägevorgangs mittels eines optischen Sensors die Lage der ersten Öffnungen 10a in der Übertragungslage 1 b der Transferfolie 1 und bildet erste Steuerdaten aus, mittels welchen ein Bewegungsablauf des Prägewerkzeugs 5 und/oder der Transferfolie 1 und/oder einer hier nicht dargestellten Transporteinheit, z.B. in Form einer Transportkette, zum Transport der Substrate 2 geregelt wird derart, dass der Abstand a zwischen den ersten Öffnungen 10a konstant oder zumindest weitgehend konstant ist. Nach Durchführung des ersten Prägevorgangs wird die zweite Folienkassette des Transferfolienaufnehmers 4 inklusive der Transferfolie 1, die nun die ersten Öffnungen 10a aufweist, mit der leeren ersten Folienkassette des Transferfolienspeichers 3 vertauscht und ein erneuter Lauf der Transferfolie 1 durch die Vorrichtung zur Durchführung eines weiteren Prägevorgangs gestartet. Im Bereich der zweiten Sensoreinheit 8 erfolgt nun eine Erfassung der Lage der ersten Öffnungen 10a mittels optischer Sensoren 8a, 8b und eine Ermittlung der Position der jeweils zwischen zwei benachbarten ersten Öffnungen 10a auszuprägenden zweiten Bereiche 11 der Übertragungslage 1b mittels eines dritten optischen Sensors 8c (siehe Figur 5). Die zweite Sensoreinheit 8 erfasst demnach während des zweiten Prägevorgangs mittels drei optischer Sensoren die Lage der ersten Öffnungen 10a in der Übertragungslage 1b der Transferfolie 1 und regelt den Bewegungsablauf des Prägewerkzeugs 5 und/oder der Transferfolie 1 und/oder einer hier nicht dargestellten Transporteinheit, z.B. in Form einer Transportkette, zum Transport der weiteren Substrate 2' derart, dass sich die ersten Öffnungen 10a nicht mit den zweiten Bereichen 11 überschneiden und ein Abstand zwischen jeder ersten Öffnung 10a und einem zweiten Bereich 11 von mindestens 0,5 mm gewahrt bleibt. Nach dem Ausprägen der zweiten Bereiche 11 durch das Prägewerkzeug 5 auf die weiteren Substrate 2' erfolgt eine Abkühlung und Trennung von Transferfolie und weiteren Substraten 2' wie bereits hinsichtlich des ersten Prägevorganges beschrieben. Die Transferfolie 1, die nun die ersten Öffnungen 10a sowie die zweiten Öffnungen 11a aufweist, wird auf die Folienkassette des Transferfolienaufnehmers 4 aufgewickelt.

Folgende Vorgaben für das Beprägen der kartenförmigen Substrate 2, 2'werden beispielhaft verwendet:

| | |
|---|---|
| Prozessgeschwindigkeit | 25000 kartenförmige Substrate 2, 2' pro Stunde |
| Länge eines kartenförmigen Substrats 2, 2' | 85,6 mm |
| Kettenteilung der Transportkette zum Transport der Substrate 2, 2' | 88,9 mm |
| Breite der Transferfolie | 10 mm |
| Dimensionen der ersten/zweiten Bereiche | 8 mm x 35 mm |
| Fläche der ersten/zweiten Bereiche | 280 mm² |
| Transferfolienverbrauch pro Stunde | 22225 m² |
| Transferfolienverbrauch pro Substrat 2 bei Durchführung lediglich eines ersten Prägevorganges | 889 mm² |
| Nutzungsgrad der Transferfolie | |
| bei lediglich einem Prägevorgang | 31,49 % |
| Transferfolienverbrauch pro Substrat 2' bei Durchführung eines weiteren Prägevorganges | 444,5 mm² |
| Nutzungsgrad der Transferfolie bei zwei Prägevorgängen | 63 % |

Die Kosten für die Transferfolie werden aufgrund der zweimaligen Nutzung der Transferfolie zur Durchführung eines ersten und eines weiteren Prägevorgangs demnach um 41 % reduziert.

Figur 5 zeigt den Ausschnitt W, in welchem sich die zweite Sensoreinrichtung 8 befindet, aus der Vorrichtung gemäß Figur 4, allerdings ohne die Transferfolie 1. Die Transferfolie 1, welche bereits die ersten Öffnungen 10a in der Übertragungslage 1 b der Transferfolie 1 aufweist, ist zur besseren Veranschaulichung der Arbeitsweise der zweiten Sensoreinheit 8 rechts daneben gezeigt. Die zweite Sensoreinheit 8 weist drei optische Sensoren 8a, 8b, 8c auf, wobei die beiden Sensoren 8a und 8b während des zweiten Prägevorgangs die Lage der ersten Öffnungen 10a in der Übertragungslage 1 b der Transferfolie 1 erfassen. Der Sensor 8c dient zur Bestimmung der Lage des noch auszuprägenden zweiten Bereichs 11. Die drei Sensoren 8a, 8b, 8c bilden zweite Steuerdaten aus, welche zur Regelung des Bewegungsablauf des Prägewerkzeugs 5 und/oder der Transferfolie 1 und/oder einer Transporteinheit zum Transport der weiteren Substrate 2' verwendet werden derart, dass sich die ersten Öffnungen 10a nicht mit den zweiten Bereichen 11 überschneiden und ein Abstand zwischen jeder ersten Öffnung 10a und einem zweiten Bereich 11 von mindestens 0,5 mm gewahrt bleibt.

Das erfindungsgemäße Verfahren kann selbstverständlich nicht nur zum Beprägen kartenförmige Substrate verwendet werden, sondern es eignet für alle Prägeprozesse, bei denen eine Transferfolie nach dem ersten Prägevorgang nur unzureichend genutzt wurde und ausreichend große Bereiche an Übertragungslage auf der Trägerfolie verblieben sind, um einen weiteren Prägevorgang mit der bereits gebrauchten Transferfolie durchführen zu können.

### Bezugszeichenliste:

- 1: Transferfolie
- 1a: Trägerfolie der Transferfolie
- 1b: Übertragungslage der Transferfolie
- 2: Substrat in Kartenform
- 2': weiteres Substrat in Kartenform
- 10: erste Bereiche der Übertragungslage
- 10a: erste Öffnungen in der Übertragungslage
- 11: zweite Bereiche der Übertragungslage
- 11a: zweite Öffnungen in der Übertragungslage
- 3: Transferfolienspeicher in Form einer ersten Folienkassette
- 3a: Abdeckscheiben der ersten Folienkassette
- 3b: Kern der ersten Folienkassette
- 4: Transferfolienaufnehmer in Form einer zweiten Folienkassette
- 4a: Abdeckscheiben der zweiten Folienkassette
- 4b: Kern der zweiten Folienkassette
- 5: Prägewerkzeug
- 6: Gegendruckrolle
- 7: erste Sensoreinheit
- 8: zweite Sensoreinheit
- 8a, 8b, 8c: Sensoren der zweiten Sensoreinheit
- 9a: erste Tänzerrolle der ersten Transferfolien-Spannvorrichtung
- 9b: zweite Tänzerrolle der zweiten Transferfolien-Spannvorrichtung
- 12: Kühleinrichtung
- 13: Prägezylinder mit Hubverstellung
- 14: Zugwerk mit Servomotor-Antrieb
- 15: Andruckrolle
- 16: Heizhaube
- 17: Segmenfirerstellung

## Patentansprüche

1. Verfahren zur Erhöhung der Ausbeute einer Transferfolie (1) beim Prägen, insbesondere beim Heißprägen, wobei die Transferfolie (1) eine Trägerfolie (1a) und eine von der Trägerfolie (1a) ablösbare Übertragungslage (1b) aufweist, wobei während eines ersten Prägevorganges erste Bereiche (10) der Übertragungslage (1 b), die in einem Abstand (a) voneinander entfernt angeordnet sind, mittels eines ersten Prägewerkzeugs von der Transferfolie (1) auf mindestens ein Substrat (2) übertragen werden, wobei in der Übertragungslage (1 b) der Transferfolie (1) erste Öffnungen (10a) im Abstand (a) erzeugt werden, **dadurch gekennzeichnet, dass** die Transferfolie (1) nach dem ersten Prägevorgang aufgewickelt und mindestens einem weiteren Prägevorgang zugeführt wird, in welchem zweite Bereiche (11) der Übertragungslage (1 b), die jeweils zwischen zwei ersten Öffnungen (10a) angeordnet sind, mittels eines zweiten Prägewerkzeugs von der Transferfolie (1) auf mindestens ein weiteres Substrat (2') übertragen werden, und wobei in der Übertragungslage (1 b) der Transferfolie (1) zweite Öffnungen (11a) erzeugt werden, die von den ersten Öffnungen (10a) beabstandet angeordnet sind.

2. Verfahren nach Anspruch 1,
**dadurch gekennzeichnet,**
**dass** als zweites Prägewerkzeug erneut das erste Prägewerkzeug verwendet wird.

3. Verfahren nach Anspruch 1 oder 2,
**dadurch gekennzeichnet,**
**dass** der Abstand (a) über die gesamte Länge der Transferfolie (1) konstant gehalten wird.

4. Verfahren nach einem der Ansprüche 1 bis 3,
**dadurch gekennzeichnet,**
**dass** die Lage der ersten Öffnungen (10a) in der Übertragungslage (1 b) der Transferfolie (1) in einer ersten Sensoreinheit (7) mittels mindestens eines ersten Sensors in Form von ersten Steuerdaten erfasst wird.

5. Verfahren nach Anspruch 4,
**dadurch gekennzeichnet,**
**dass** während des ersten Prägevorgangs der Bewegungsablauf, vorzugsweise die Geschwindigkeit und/oder die räumliche Lage des ersten Prägewerkzeugs und/oder der Transferfolie (1) und/oder einer Transporteinrichtung zum Transport des mindestens einen Substrats (2) mittels der ersten Steuerdaten geregelt wird.

6. Verfahren nach einem der Ansprüche 1 bis 5,
**dadurch gekennzeichnet,**
**dass** die Lage der ersten Öffnungen (10a) in der Übertragungslage (1b) der Transferfolie (1) vor dem mindestens einen weiteren Prägevorgang in einer zweiten Sensoreinheit (8), welche mindestens einen Sensor aufweist, in Form von zweiten Steuerdaten erfasst wird.

7. Verfahren nach Anspruch 6,
**dadurch gekennzeichnet,**
**dass** die zweite Sensoreinheit (8) insgesamt drei Sensoren (8a, 8b, 8c) aufweist, wobei mittels zwei Sensoren (8a, 8b) die Lage einer ersten Öffnung (10a) bestimmt und mittels des dritten Sensors (8c) die Position der benachbart zu dieser ersten Öffnung (10a) zu bildenden zweiten Öffnung (11a) ermittelt wird.

8. Verfahren nach Anspruch 7,
**dadurch gekennzeichnet,**
**dass** während des mindestens einen weiteren Prägevorgangs der Bewegungsablauf des zweiten Prägewerkzeugs und/oder der Transferfolie (1) und/oder einer Transporteinrichtung zum Transport des mindestens einen weiteren Substrats (2') mittels der zweiten Steuerdaten geregelt wird.

9. Verfahren nach einem der Ansprüche 1 bis 8,
**dadurch gekennzeichnet,**
**dass** die Transferfolie (1) von einem Transferfolienspeicher (3) in Form einer ersten Folienkassette dem ersten Prägewerkzeug zugeführt und nach dem ersten Prägevorgang mit konstanter Folienspannung auf einen Transferfolienaufnehmer (4) in Form einer zweiten Folienkassette aufgewickelt wird, wobei insbesondere nach dem ersten Prägevorgang die zweite Folienkassette, auf die die Transferfolie (1) inklusive der ersten Öffnungen (10a) aufgewickelt wurde, als Transferfolienspeicher (3) zur Durchführung des mindestens einen weiteren Prägevorgangs und die leere erste Folienkassette als Transferfolienaufnehmer (4) verwendet wird.

10. Verfahren nach einem der Ansprüche 1 bis 9,
**dadurch gekennzeichnet,**
**dass** eine erste Öffnung (10a) und eine benachbarte zweite Öffnung (11a) mindestens 0,5 mm, insbesondere mindestens 1 mm, voneinander beabstandet gebildet werden, wobei die beiden Öffnungen (10a,11a) vorzugsweise gleich groß ausgebildet werden.

11. Vorrichtung zur Durchführung eines Verfahrens nach einem der Ansprüche 1 bis 10, die folgende Baugruppen aufweist:
- einen Transferfolienspeicher (3), der die Transferfolie (1) in aufgewickelter Form bereitstellt,
- ein Prägewerkzeug (5), das das erste und zweite Prägewerkzeug bildet und dem die Transferfolie (1) vom Transferfolienspeicher (3) zuführbar ist, und
- einen Transferfolienaufnehmer (4), auf den die Transferfolie (1) inklusive der ersten Öffnungen (10a) nach dem ersten Prägevorgang aufwickelbar ist und welcher als Transferfolienspeicher (3) zum Abwickeln der die ersten Öffnungen (10a) aufweisenden Transferfolie (1) in mindestens einem weiteren Prägevorgang verwendbar ist, **gekennzeichnet durch**
- eine zwischen dem Prägewerkzeug (5) und dem Transferfolienaufnehmer (4) angeordnete erste Sensoreinheit (7), wobei mittels mindestens eines ersten Sensors der ersten Sensoreinheit (7) die Lage der ersten Öffnungen (10a) in der Übertragungslage (1 b) der Transferfolie (1) vor dem Aufwickeln auf den Transferfolienaufnehmer (4) in Form von ersten Steuerdaten erfassbar ist, und
- eine zwischen dem Transferfolienspeicher (3) und dem Prägewerkzeug (5) angeordnete zweite Sensoreinheit (8), wobei mittels mindestens eines weiteren Sensors der zweiten Sensoreinheit (8) die Lage der ersten Öffnungen (10a) in der Übertragungslage (1 b) der Transferfolie (1) vor dem mindestens einen weiteren Prägevorgang in Form von zweiten Steuerdaten erfassbar ist.

12. Vorrichtung nach Anspruch 11,
**dadurch gekennzeichnet,**
**dass** der Transferfolienspeicher (3) durch eine erste Folienkassette und der Transferfolienaufnehmer (4) durch eine zweite Folienkassette gebildet sind, die jeweils einen ringförmigen Kern (3b, 4b) und zwei Abdeckscheiben (3a, 4a) umfassen, so dass die Transferfolie (1) um den Kern (3b, 4b) wickelbar und seitlich jeweils durch eine der beiden Abdeckscheiben (3a, 4a) begrenzbar ist, wobei insbesondere die Vorrichtung jeweils einen Antriebsmotor zum geregelten Antrieb der ersten und zweiten Folienkassette aufweist, um die Transferfolie (1) am Transferfolienspeicher (3) abzuwickeln und am Transferfolienaufnehmer (4) aufzuwickeln.

13. Vorrichtung nach Anspruch 12,
**dadurch gekennzeichnet,**
**dass** die erste und die zweite Folienkassette austauschbar sind, wobei dass nach dem ersten Prägevorgang die zweite Folienkassette, auf die die Transferfolie (1) inklusive der ersten Öffnungen (10a) aufgewickelt ist, den Transferfolienspeicher (3) zur Durchführung des mindestens einen weiteren Prägevorgangs und die leere erste Folienkassette den Transferfolienaufnehmer (4) bildet.

14. Vorrichtung nach einem der Ansprüche 11 bis 13,
**dadurch gekennzeichnet,**
**dass** zwischen dem Prägewerkzeug (5) und dem Transferfolienaufnehmer (4) eine erste Transferfolien-Spannvorrichtung und/oder zwischen dem Transferfolienspeicher (3) und der zweiten Sensoreneinheit (8) eine zweite Transferfolien-Spannvorrichtung angeordnet ist, wobei die erste bzw. zweite Transferfolien-Spannvorrichtung jeweils die Folienspannung der Transferfolie (1) im Bereich zwischen dem Prägewerkzeug (5) und dem Transferfolienaufnehmer (4) bzw. zwischen dem Transferfolienspeicher (3) und dem Prägewerkzeug (5) konstant halten und vorzugsweise eine Spannrolle oder Tänzerrolle (9a) umfassen, deren Position pneumatisch veränderbar ist.

15. Vorrichtung nach einem der Ansprüche 11 bis 14,
**dadurch gekennzeichnet,**
**dass** die zweite Sensoreinheit (8) insgesamt drei Sensoren (8a, 8b, 8c) aufweist, wobei mittels zwei Sensoren (8a, 8b) die Lage einer ersten Öffnung (10a) bestimmbar und mittels des dritten Sensors (8c) die Position der benachbart zu dieser ersten Öffnung (10a) zu bildenden zweiten Öffnung (11a) ermittelbar ist.

## Claims

1. Method for increasing the output of a transfer film (1) when embossing, in particular when hot embossing, the transfer film (1) having a carrier film (1a) and a transfer layer (1b) which is detachable from the carrier film (1a), first regions (10) of the transfer layer (1b), which are arranged so as to be removed from each other at a spacing (a), being transferred by means of a first embossing tool from the transfer film (1) onto at least one substrate (2) during a first embossing operation, first openings (10a) being produced in the transfer layer (1b) of the transfer film (1) in the spacing (a), **characterised in that** the transfer film (1) is wound up after the first embossing operation and fed to at least one further embossing operation, in which second regions (11) of the transfer layer (1b) arranged in each case between two first openings (10a) are transferred from the transfer film (1) onto at least one further substrate (2') by means of a second embossing tool, and second openings (11a) being produced in the transfer layer (1b) of the transfer film (1), said second openings being arranged at a distance from the first openings (10a).

2. Method according to claim 1, **characterised in that** the first embossing tool is used again as the second embossing tool.

3. Method according to claim 1 or 2, **characterised in that** the spacing (a) is kept constant over the entire length of the transfer film (1).

4. Method according to one of claims 1 to 3, **characterised in that** the position of the first openings (10a) in the transfer layer (1b) of the transfer film (1) is detected, in the form of first control data, in a first sensor unit (7) by means of at least one first sensor.

5. Method according to claim 4, **characterised in that**, during the first embossing operation, the sequence of movements, preferably the speed and/or spatial position, of the first embossing tool and/or of the transfer film (1) and/or of a transport device for transporting the at least one substrate (2) is regulated by means of the first control data.

6. Method according to one of claims 1 to 5, **characterised in that** the position of the first openings (10a) in the transfer layer (1b) of the transfer film (1) is detected, in the form of second control data, before the at least one further embossing operation in a second sensor unit (8), which has at least one sensor.

7. Method according to claim 6, **characterised in that** the second sensor unit (8) has a total of three sensors (8a, 8b, 8c), the position of a first opening (10a) being determined by means of two sensors (8a, 8b), and the position of the second opening (11a) to be formed adjacent to said first opening (10a) being ascertained by means of the third sensor (8c).

8. Method according to claim 7, **characterised in that**, during the at least one further embossing operation, the sequence of movements of the second embossing tool and/or of the transfer film (1) and/or of a transport device for transporting the at least one further substrate (2') is regulated by means of the second control data.

9. Method according to one of claims 1 to 8, **characterised in that** the transfer film (1) is fed from a transfer film store (3) in the form of a first film cartridge to the first embossing tool and, after the first embossing operation, is wound with constant film tension onto a transfer film receiver (4) in the form of a second film cartridge, the second film cartridge onto which the transfer film (1) inclusive of the first openings (10a) was wound being used, in particular after the first embossing operation, as the transfer film store (3) for carrying out the at least one further embossing operation, and the empty first film cartridge being used as the transfer film receiver (4)

10. Method according to one of claims 1 to 9, **characterised in that** a first opening (10a) and an adjacent second opening (11a) are formed at a distance from each other of at least 0.5 mm, in particular at least 1 mm, the two openings (10a, 11a) preferably being of equal size.

11. Apparatus for carrying out a method according to one of claims 1 to 10, said apparatus comprising the follow modules:
- a transfer film store (3), which provides the transfer film (1) in wound-up form,
- an embossing tool (5), which forms the first and second embossing tool and to which the transfer film (1) can be fed from the transfer film store (3), and
- a transfer film receiver (4), onto which the transfer film (1) inclusive of the first openings (10a) can be wound after the first embossing operation, and which, in at least one further embossing operation, can be used as a transfer film store (3) to wind up the transfer film (1) comprising the first openings (10a),
**characterised by**
- a first sensor unit (7) arranged between the embossing tool (5) and the transfer film receiver (4), the position of the first openings (10a) in the transfer layer (1b) of the transfer film (1) being detectable, in the form of first control data, by means of at least one first sensor of the first sensor unit (7) prior to the step of winding onto the transfer film receiver (4), and
- a second sensor unit (8) arranged between the transfer film store (3) and the embossing tool (5), the position of the first openings (10a) in the transfer layer (1b) of the transfer film (1) being detectable, in the form of second control data, by means of at least one further sensor of the second sensor unit (8) prior to the at least one further embossing operation.

12. Apparatus according to claim 11, **characterised in that** the transfer film store (3) is formed by a first film cartridge and the transfer film receiver (4) is formed by a second film cartridge, each cartridge comprising an annular core (3b, 4b) and two cover plates (3a, 4a), so that the transfer film (1) can be wound around the core (3b, 4b) and can be laterally defined in each case by one of the two cover plates (3a, 4a), in particular the apparatus having a drive motor for the regulated drive of the first and second film cartridges so as to unwind the transfer film (1) at the transfer film store (3) and to wind it on at the transfer film receiver (4).

13. Apparatus according to claim 12, **characterised in that** the first and second film cartridges are interchangeable in such a way that, after the first embossing operation, the second film cartridge onto which the transfer film (1) inclusive of the first openings (10a) is wound forms the transfer film store (3) for carrying out the at least one further embossing operation, and the empty first film cartridge forms the transfer film receiver (4).

14. Apparatus according to one of claims 11 to 13, **characterised in that** a first transfer film tensioning device is arranged between the embossing tool (5) and the transfer film receiver (4), and/or a second transfer film tensioning device is arranged between the transfer film store (3) and the second sensor unit (8), the first and second transfer film tensioning devices each keeping constant the tension of the transfer film (1) in the region between the embossing tool (5) and the transfer film receiver (4) and between the transfer film store (3) and the embossing tool (5) respectively, and preferably comprising a tensioning roller or dancer roller (9a), of which the position is pneumatically variable.

15. Apparatus according to one of claims 11 to 14, **characterised in that** the second sensor unit (8) has a total of three sensors (8a, 8b, 8c), the position of a first opening (10a) being determinable by means of two sensors (8a, 8b), and the position of the second opening (11a) to be formed adjacent to said first opening (10a) being ascertainable by means of the third sensor (8c).

## Revendications

1. Procédé pour améliorer le rendement d'un film de transfert (1) lors du gaufrage, en particulier lors du gaufrage à chaud, le film de transfert (1) présentant un film support (1a) et présentant une couche de transmission (1 b) pouvant se décoller du film support (1a), des premières zones (10) de la couche de transmission (1 b), qui sont disposées à une certaine distance (a) les unes des autres, pouvant être transférées pendant une première opération de gaufrage au moyen d'un premier outil de gaufrage du film de transfert (1) à au moins un substrat (2), des premières ouvertures (10a) étant générées à distance (a) dans la couche de transmission (1 b) du film de transfert (1), **caractérisé en ce que** le film de transfert (1) est enroulé après la première opération de gaufrage et est amené à au moins une autre opération de gaufrage, dans laquelle des secondes zones (11) de la couche de transmission (1 b) qui sont disposées respectivement entre deux premières ouvertures (10a), sont transmises au moyen d'un second outil de gaufrage du film de transfert (1) à au moins un autre substrat (2'), et des secondes ouvertures (11a) étant générées dans la couche de transmission (1 b) du film de transfert (1), lesquelles ouvertures sont disposées à distance des premières ouvertures (10a).

2. Procédé selon la revendication 1,
**caractérisé**
**en ce que** le premier outil de gaufrage est utilisé comme second outil de gaufrage.

3. Procédé selon la revendication 1 ou 2,
**caractérisé en ce que** la distance (a) est maintenue constante sur toute la longueur du film de transfert (1).

4. Procédé selon l'une des revendications 1 à 3,
**caractérisé en ce que** la position des premières ouvertures (10a) est enregistrée dans la couche de transmission (1 b) du film de transfert (1) dans une première unité capteur (7) au moyen d'au moins un premier capteur sous forme de premières données de commande.

5. Procédé selon la revendication 4,
**caractérisé en ce que**,
pendant la première opération de gaufrage, le déroulement du mouvement, de préférence la vitesse et/ou la position dans l'espace du premier outil de gaufrage et/ou du film de transfert (1) et/ou d'un système de transport pour le transport du au moins un substrat (2) est régulé au moyen des premières données de commande.

6. Procédé selon l'une des revendications 1 à 5,
**caractérisé en ce que**
la position des premières ouvertures (10a) dans la couche de transmission (1 b) du film de transfert (1) est enregistrée avant la au moins une autre opération d'estampage dans une seconde unité capteur (8), qui présente au moins un capteur, sous forme de secondes données de commande.

7. Procédé selon la revendication 6,
**caractérisé en ce que**
la seconde unité capteur (8) présente au total trois capteurs (8a, 8b, 8c), la position d'une première ouverture (10a) étant déterminée au moyen de deux capteurs (8a, 8b) et la position de la seconde ouverture (11 a), à former à proximité de cette première ouverture (10a), étant déterminée au moyen du troisième capteur (8c).

8. Procédé selon la revendication 7,
**caractérisé en ce que**,
pendant la au moins une autre opération de gaufrage, le déroulement du mouvement du second outil de gaufrage et/ou du film de transfert (1) et/ou d'un dispositif de transport pour le transport du au moins un autre substrat (2') est régulé au moyen des secondes données de commande.

9. Procédé selon l'une des revendications 1 à 8,
**caractérisé en ce que**,
le film de transfert (1) est amené d'un accumulateur de film de transfert (3) sous la forme d'une première cassette à film au premier outil de gaufrage et, après la première opération de gaufrage, est enroulé avec une tension de film constante sur un récepteur de film de transfert (4) sous la forme d'une seconde cassette à film, la seconde cassette à film, sur laquelle le film de transfert (1) a été enroulé avec les premières ouvertures (10a), étant utilisée en particulier après la première opération de gaufrage comme accumulateur de film de transfert (3) pour la mise en oeuvre de la au moins une autre opération de gaufrage et la première cassette à film vide étant utilisée comme récepteur de film de transfert (4).

10. Procédé selon l'une des revendications 1 à 9,
**caractérisé en ce**
**qu'**une première ouverture (10a) et une seconde ouverture (11a) voisine sont formées espacées l'une de l'autre d'au moins 0,5 mm, en particulier d'au moins 1 mm, les deux ouvertures (10a, 11 a) étant conçues de préférence de la même grandeur.

11. Dispositif pour la mise en oeuvre d'un procédé selon l'une des revendications 1 à 10, qui présente les ensembles suivants :
- un accumulateur de film de transfert (3), qui met à disposition le film de transfert (1) dans une forme enroulée,
- un outil de gaufrage (5), qui forme le premier et le second outil de gaufrage et auquel le film de transfert (1) peut être amené à partir de l'accumulateur de film de transfert (3), et
- un récepteur de film de transfert (4), sur lequel le film de transfert (1) peut être enroulé avec les premières ouvertures (10a) après la première opération de gaufrage et qui peut être utilisé comme accumulateur de film de transfert (3) pour le déroulement du film de transfert (1) présentant les premières ouvertures (10a) dans au moins une autre opération de gaufrage, **caractérisé par**
- une première unité capteur (7) disposée entre l'outil de gaufrage (5) et le récepteur de film de transfert (4), la position des premières ouvertures (10a) dans la couche de transmission (1 b) du film de transfert (1) pouvant être enregistrée au moyen d'au moins un premier capteur de la première unité capteur (7) avant l'enroulement sur le récepteur de film de transfert (4) sous la forme des premières données de commande et
- une seconde unité capteur (8) disposée entre l'accumulateur de film de transfert (3) et l'outil de gaufrage (5), la position des premières ouvertures (10a) dans la couche de transmission (1b) du film de transfert (1) pouvant être enregistrée au moyen d'au moins un autre capteur de la seconde unité capteur (8) avant la au moins une autre opération de gaufrage sous forme de secondes données de commande.

12. Dispositif selon la revendication 11,
**caractérisé en ce que**,
l'accumulateur de film de transfert (3) et le récepteur de film de transfert (4) sont formés respectivement par une première cassette à film et par une seconde cassette à film, lesquelles comprennent respectivement un noyau (3b, 4b) annulaire et deux disques de recouvrement (3a, 4a), de sorte que le film de transfert (1) peut être enroulé autour du noyau (3b, 4b) et peut être délimité sur le côté respectivement par l'un des deux disques de recouvrement (3a, 4a), en particulier le dispositif présentant à chaque fois un moteur d'entraînement pour l'entraînement régulé de la première et de la seconde cassettes à film, afin de dérouler le film de transfert (1) sur l'accumulateur de film de transfert (3) et de l'enrouler sur le récepteur de film de transfert (4).

13. Dispositif selon la revendication 12,
**caractérisé en ce que**,
la première et la seconde cassettes à film peuvent être permutées, la seconde cassette à film, sur laquelle le film de transfert (1) est enroulé avec les premières ouvertures (10a), formant après la première opération de gaufrage un accumulateur de film de transfert (3) pour la mise en oeuvre de la au moins une autre opération de gaufrage et la première cassette à film vide formant le récepteur de film de transfert (4).

14. Dispositif selon l'une des revendications 11 à 13,
**caractérisé en ce**
**qu'**un premier dispositif de tension de film de transfert et/ou un second dispositif de tension de film de transfert est disposé respectivement entre l'outil de gaufrage (5) et le récepteur de film de transfert (4) et/ou entre l'accumulateur de film de transfert (3) et la seconde unité capteur (8), le premier ou le second dispositif de tension de film de transfert maintenant constante à chaque fois la tension du film de transfert (1) dans la zone entre l'outil de gaufrage (5) et le récepteur de film de transfert (4) et/ou entre l'accumulateur de film de transfert (3) et l'outil de gaufrage (5) et comprenant de préférence un galet tendeur ou un galet compensateur (9a), dont la position peut être modifiée de façon pneumatique.

15. Dispositif selon l'une des revendications 11 à 14,
**caractérisé en ce que**
la seconde unité capteur (8) présente au total trois capteurs (8a, 8b, 8c), la position d'une première ouverture (10a) pouvant être déterminée au moyen de deux capteurs (8a, 8b) et la position de la seconde ouverture (11a), à former à proximité de cette première ouverture (10a), pouvant être déterminée au moyen du troisième capteur (8c).
